# EUROPÄISCHE PATENTSCHRIFT

(11) **EP 2 792 961 B1**
(45) Veröffentlichungstag und Bekanntmachung des Hinweises auf die Patenterteilung: **31.07.2019**
(21) Anmeldenummer: 13164414.8
(22) Anmeldetag: 19.04.2013
(51) Int. Cl.: F24F 12/00, F24F 13/20

(54) **Wärmetauscheraggregat**
Heat exchange unit
Module d'échangeur de chaleur

(43) Veröffentlichungstag der Anmeldung: 22.10.2014
(73) Patentinhaber: Häusler, Peter, 8057 Zürich (CH)
(72) Erfinder: Häusler, Peter, 8057 Zürich (CH)
(74) Vertreter: Hepp Wenger Ryffel AG

(56) Entgegenhaltungen:
- EP-A2- 2 447 615
- WO-A2-2009/156641
- DE-U1- 8 434 598
- DE-U1-202005 011 482
- US-A- 5 761 908

## Beschreibung

Die Erfindung betrifft ein Wärmetauscheraggregat mit einem Wärmetauschermodul, ein Wärmetauschermodul sowie eine Wärmetauscheranordnung.

Aus dem Stand der Technik sind vielfältige Wärmetauscheranordnungen bekannt, bei denen ein Wärmetauscher einen Wärmeaustausch zwischen aus einem Gebäude herausströmender und in ein Gebäude hineinströmender Luft ermöglicht.

Typischerweise ist ein Wärmetauscher mit vier Leitungen verbunden. Eine Abluftleitung führt Abluft, welche die Temperatur der Gebäudeinnenseite aufweist, zum Wärmetauscher. Eine Zuluftleitung führt Luft aus dem Wärmetauscher zum Bestimmungsort im Gebäude. Die Zuluft hat eine an die Temperatur der Gebäudeinnenseite angenäherte Temperatur. Eine Fortluftleitung führt Luft aus dem Wärmetauscher in die Aussenatmosphäre. Die Temperatur der Fortluft hat sich an die Aussentemperatur angeglichen. Eine Aussenluftleitung führt Luft aus der Aussenatmosphäre zum Wärmetauscher, wobei diese Luft die Temperatur der Aussenatmosphäre aufweist.

Die Wärmetauscher können innerhalb eines Gebäudes angeordnet sein, wie dies beispielsweise in EP 1 184 627 oder DE 20 2007 009 821 offenbart ist.

Die Wärmetauscher können dezentral angebracht sein, insbesondere können sie separat in den jeweiligen Zimmern oder Wohneinheiten eines Gebäudes montiert sein.

Alternativ können die Wärmetauscher zentral in einem Versorgungsraum platziert sein.

In jedem Fall befinden sich die Fortluftleitung und die Aussenluftleitung, welche die Durchleitung der Luft zwischen dem Wärmetauscher und der Aussenatmosphäre ermöglichen, innerhalb des Gebäudes.

Die Fortluftleitung und die Aussenluftleitung, die im Idealfall Luft mit Aussentemperatur führen, befinden sich für innerhalb des Gebäudes montierte Wärmetaucher innerhalb des temperierten Bereichs, der im Winter zu wärmen und im Sommer zu kühlen ist.

Um die thermischen Verluste entlang der Fortluftleitung und der Aussenluftleitung gering zu halten, müssen die Leitungen auf der gesamten Länge zuverlässig isoliert werden.

Ebenso befindet sich der eigentliche Wärmetauscher im temperierten Innenbereich. Das Gerät weist daher thermische Verluste auf und einen reduzierten Tauschwirkungsgrad.

Um den Wärmetauscher zu warten, muss ein Zugang zum Wärmetauscher innerhalb des Gebäudes geschaffen werden, im Zweifelsfall sogar ein Zugang in den jeweiligen Wohneinheiten. Dies macht die Bedienung schwierig.

Die Akzeptanz für einen Wärmetauscher innerhalb einer Wohneinheit wird ausserdem durch den Platzbedarf und durch etwaige Geräuschemissionen beeinträchtigt.

Alternativ kann ein Wärmetauscher ausserhalb eines Gebäudes, beispielsweise auf einem Dach angebracht werden, wie dies beispielsweise in der Druckschrift US 8,261,568 gezeigt ist.

Bei an der Aussenseite des Gebäudes montierten Wärmetauscheranordnungen müssen die Zuluftleitung und die Abluftleitung, welche im Idealfall Luft mit Innentemperatur führen, aus dem Gebäude heraus zum Wärmetauscher geführt werden.

Um die thermischen Verluste gering zu halten, müssen die Leitungen vollständig und zuverlässig isoliert werden. Auf der Gebäudeaussenseite montierte Wärmetauscher sind zwar prinzipiell gut von der Aussenseite des Gebäudes zugänglich, es können jedoch bauphysikalische Probleme bei der Durchführung durch die Gebäudehülle, zum Beispiel bei der Dachdurchführung, entstehen, da für eine gut isolierte Gebäudedurchführung zu sorgen ist. Dies ist insbesondere dann schwierig, wenn Wärmetauscher nachgerüstet werden sollen.

Da die Zuluftleitung und die Abluftleitung durch untemperierten Aussenbereich geführt werden, besteht die Gefahr der Kondenswasser- und sogar Eisbildung.

Der sich im nicht temperierten Bereich befindliche Wärmetauscher kann einen reduzierten Tauschwirkungsgrad aufweisen.

Insbesondere bei nachträglicher Anbringung der Wärmetauscher können Einbussen bei dem ästhetischen Eindruck des Gebäudes entstehen.

In einer weiteren Alternative kann sich ein Wärmetauscher über die gesamte Höhe eines im Gebäude vorgesehenen Schachts, beispielsweise eines Kamins erstrecken, wie dies beispielsweise in DE 44 10 434 oder DE 297 09 935 offenbart ist.

Die Montage ist allerdings sehr aufwendig, da der gesamte Schacht isoliert werden muss.

DE 20 2005 011482 U1 zeigt ein Wärmerückgewinnungsgerät, das für den Einbau in einer Wanddurchbruchöffnung geeignet ist. Ein Kreuzwärmetauscher, zwei Ventilatoren und Luftfilter sind in einem Gehäuse aus chassis-artigen Formkörpern angeordnet und bilden einen Lüftereinsatz, der in eine Wanddurchführungshülse einschiebbar ist.

EP 2 447 615 A2 offenbart einen in einem Gehäuse angeordneten Kreuzwärmetauscher. Das Gehäuse ist dichtend in einen Mauerkasten einschiebbar, der zum Einbauen in die thermische Gebäudehülle vorgesehen ist.

US 5 761 908 A zeigt ein Wärmetauscheraggregat zum Einbau in Gebäudewände, z.B. in Fenster.

Es stellt sich daher die Aufgabe, ein Wärmetauscheraggregat, ein Wärmetauschermodul sowie eine Wärmetauscheranordnung zur Verfügung zu stellen, welche die Nachteile des Bekannten überwinden und mit denen ein hoher Wärmetauschwirkungsgrad erreicht werden kann, die Anzahl der thermischen Störzonen minimiert und die Notwendigkeit von isolierten Leitungen reduziert wird. Bei geringem Platzbedarf soll eine kostengünstige Lösung zur Verfügung gestellt werden.

Die erfindungsgemäss gestellte Aufgabe wird gelöst durch ein Wärmetauscheraggregat mit mindestens einem Wärmetauschermodul gemäss Anspruch 1.

Das Wärmetauschermodul umfasst mindestens einen Wärmetauscher für die Durchleitung von Fluid zwischen einer Innenatmosphäre und einen Aussenatmosphäre. Der Wärmetauscher weist mindestens einen Zuluftanschluss und mindestens einen Abluftanschluss auf, die insbesondere mit gebäudeinnenseitigen Leitungen verbindbar sind. Der Wärmetauscher weist ausserdem mindestens einen Fortluftanschluss und mindestens einen Aussenluftanschluss auf.

Das Wärmetauschermodul weist ein Gehäuse auf.

Das Wärmetauscheraggregat weist ausserdem mindestens eine Zarge auf, die in eine Gebäudehülle integrierbar ist und die mit dem Wärmetauschermodul verbindbar ist, insbesondere lösbar verbindbar ist.

Das Gehäuse mit wenigstens einem Gehäusewandabschnitt und/oder die Zarge mit wenigstens einem Zargenabschnitt schliessen erfindungsgemäss in einem Bereich zwischen der Innenatmosphäre und der Aussenatmosphäre derart an den Wärmetauscher an, dass im montierten Zustand der Zuluftanschluss und der Abluftanschluss in die Innenatmosphäre münden, sowie der Fortluftanschluss und der Aussenluftanschluss in die Aussenatmosphäre münden.

Bei dem Wärmetauscher kann es sich um einen Kreuzstrom-, einen Gegenstrom-, einen kombinierten Kreuz-Gegenstrom-Wärmetauscher, um ein Wärmerad und/oder einen Enthalpiewärmetauscher handeln handeln.

Das erfindungsgemässe Wärmetauscheraggregat sorgt dafür, dass im montierten Zustand des Wärmetauscheraggregats der Wärmetauscher genau am Übergang zwischen der Innenatmosphäre und der Aussenatmosphäre angeordnet ist.

Somit befinden sich die Zuluft- und die Abluftleitungen, die idealerweise Luft mit Innentemperatur führen, auf der Gebäudeinnenseite, sie befinden sich also im temperierten Bereich, während die Fortluft- und Aussenluftanschlüsse, die idealerweise Luft mit Aussentemperatur führen, auf der Aussenseite des Gebäudes im nicht temperierten Aussenbereich angeordnet sind. Eine Isolierung der Leitungen zur Vermeidung von Wärmeverlusten ist daher nicht notwendig.

Mit Gebäuden sind in der vorliegenden Anmeldung insbesondere feststehende Bauwerke mit umschlossenem Raum gemeint. Das Wärmetauscheraggregat ist jedoch auch an mobilen Einheiten montierbar, beispielsweise an Containern, Wohnwagen, Wohnmobilen, Eisenbahnwagons, Schiffen und dergleichen.

Bei der Gebäudehülle handelt es sich insbesondere um das Dach des Gebäudes oder eine Gebäudeaussenwand, einen thermisch isolierter Dachboden oder eine thermisch isolierte Kellerdecke.

Unter den durchgeleiteten Fluiden werden im vorliegenden Fall insbesondere die Zuluft und die Abluft verstanden. Prinzipiell können jedoch auch andere Gase, insbesondere Verbrennungsgase oder Flüssigkeiten durch den Wärmetauscher geleitet werden.

Die Zarge ist in die Gebäudehülle integrierbar. Sie kann beispielsweise eingeputzt, eingeklebt oder eingemauert werden. Sie kann Befestigungsmittel aufweisen und beispielsweise in die Gebäudehülle geklemmt oder an die Gebäudehülle angeschraubt werden.

Die Zarge ist insbesondere derart in die Gebäudehülle integrierbar, dass die Gebäudehülle kontinuierlich durch die Zarge fortgesetzt wird, und kein Bereich zwischen Gebäudehülle und Zarge vorliegt, der wärmedurchlässiger ist als die Gebäudehülle oder die Zarge selbst. Der Einbau kann in vergleichbarer Weise erfolgen, wie der Einbau einer Türzarge oder eines Fensterblendrahmens.

Die Zarge dient zur Aufnahme des Wärmetauschermoduls, insbesondere des Gehäuses des Wärmetauschermoduls.

Bevorzugt können die Wärmetauschermodule beispielsweise zu Wartungs- und/oder Reinigungszwecken aus der Zarge entnommen werden.

Ein Wärmetauschermodul kann einen oder mehrere Wärmetauscher umfassen. In eine Zarge kann wahlweise ein Wärmetauschermodul montiert werden, das einen Wärmetauscher umfasst, oder ein Wärmetauschermodul, das mehrere Wärmetauscher umfasst. Eine Zarge kann ein Wärmetauschermodul oder mehrere Wärmetauschermodule aufnehmen, so dass zu einem Wärmetauscheraggregat ein Wärmetauschermodul oder mehrere Wärmetauschermodule gehören können.

Das Wärmetauschermodul hat bevorzugt ein normiertes Gehäuse, das zu einer ebenfalls normierten Zarge passt.

In einer Zarge können daher Wärmetauschermodule gesammelt werden. Es kann also in einem Wärmetauscheraggregat ein Bündel von Vorrichtungen vorgesehen sein, mit welchem beispielsweise mehrere Wohnungen separat steuerbar sind.

Auf diese Weise sind einerseits einzelne, jeweiligen Wohnungen zugeordnete Funktionen separat bedien- und steuerbar, zum anderen sind die Funktionen an einem Ort zusammengefasst und können von dort zentral gewartet, gereinigt und/oder kontrolliert werden.

In der Regel hat jede Wohnung einen separaten Wärmetauscher, normalerweise mit einem separaten Antrieb und separater Steuerung.

Unabhängig davon, ob ein oder mehrere Wärmtauscher in einem Modul angeordnet sind oder ob ein Modul oder mehrere Module in einer Zarge aufgenommen werden können, müssen Module und Zarge so aufeinander angepasst sein, dass eine Montage vor Ort problemlos vonstatten geht.

In einer bevorzugten Ausführung der Erfindung ist zwischen dem Wärmetauschermodul, insbesondere dem Gehäuse des Wärmetauschermoduls, und der Zarge eine hermetische Verbindung herstellbar.

Diese gewährleistet, dass kein Wärmeverlust an der Schnittstelle zwischen Wärmetauschermodul und Zarge entsteht.

Die Zarge kann so ausgeführt sein, dass sie die Gebäudehülle nach aussen hin erweitert bzw. ausstülpt oder so, dass sie die Gebäudehülle in Richtung des Gebäudeinneren erweitert, bzw. einstülpt.

Die Zarge und das Gehäuse des Wärmetauschermoduls ersetzen einen mehr oder weniger grossen Anteil der Gebäudehülle.

In einer bevorzugten Ausführung der Erfindung weist das Wärmetauscheraggregat daher eine thermische Isolierung auf, mit einer Innenseite die im montierten Zustand zur Innenatmosphäre weist, und einer Aussenseite, die im montierten Zustand zu der Aussenatmosphäre weist.

Im montierten Zustand sind die Isolierung und der Wärmetauscher so angeordnet, dass der Zuluftanschluss und der Abluftanschluss auf der Innenseite der Isolierung liegen und der Fortluftanschluss, sowie der Aussenluftanschluss auf der Aussenseite der Isolierung liegen.

Bevorzugt ist der Wärmedurchgangskoeffizient der Isolierung und/oder der hermetischen Verbindung kleiner als 1 W/m²K, bevorzugt kleiner als 0,5 W/m²K, weiter bevorzugt kleiner als 0,3 W/m²K und weiter bevorzugt kleiner als 0,2 W/m²K.

Das Wärmetauscheraggregat hat somit abgesehen von dem eigentlichen Wärmetauscher einen Wärmedurchgangskoeffizient, der typisch für thermisch isolierte Dachflächen von ungeheizten Dachstühlen ist.

Zumindest einen Teil der Isolierung kann an und im Gehäuse des Wärmetauschermoduls angebracht sein und/oder zumindest einen Teil der Isolierung kann an oder in der Zarge angebracht sein, sodass ein Wärmetransfer von der Innenseite zur Aussenseite und umgekehrt ausserhalb des eigentlichen Wärmetauschs weitestgehend verhindert wird.

Als Isolierung kann eine auf einen Zargenabschnitt und/oder einen Gehäusewandabschnitt aufgetragene Beschichtung vorgesehen sein.

Die Zarge und/oder das Gehäuse des Wärmetauschermoduls können auch aus geeignetem Isoliermaterial gefertigt sein.
In einer vorteilhaften Ausführung der Erfindung weisen das Wärmetauschermodul, insbesondere das Gehäuse des Wärmetauschermoduls und die Zarge zueinander komplementäre Dichtflächen auf.

Die Dichtflächen sorgen für eine hermetische Verbindung, wenn das Wärmetauschermodul bestimmungsgemäss mit der Zarge verbunden ist.

Es sind bevorzugt Dichtflächen um die Zuluft- und die Abluftanschlüsse herum angeordnet.

An den Dichtflächen kann Dichtungsmaterial angebracht sein. Alternativ und zusätzlich kann bei der Montage eine Dichtung aus Dichtmaterial zwischen die Dichtflächen gebracht werden.

Bevorzugt ist mindestens eine Dichtfläche an der Aussenseite des Gehäuses vorgesehen.

In einer vorteilhaften Ausführung der Erfindung ist das Wärmetauschermodul, insbesondere das Gehäuse, in die Zarge einschiebbar. Alternativ kann das Wärmetauschermodul, insbesondere das Gehäuse auf die Zarge aufsetzbar sein.

Die Dichtflächen können so angeordnet sein, dass sie eine Flächenkomponente in Einschub- oder Aufsetzrichtung haben, sodass die Dichtflächen miteinander in Kontakt kommen, wenn das Wärmetauschermodul in die Zarge geschoben wird oder auf die Zarge aufgesetzt wird.

Das Wärmetauschermodul ist auf diese Art und Weise ohne grossen Montageaufwand, bevorzugt sogar ohne Werkzeug, aus der Zarge entnehmbar und mit der Zarge verbindbar.

Bevorzugt entsprechen sich im Wesentlichen die Durchströmrichtung und die Einschieberichtung oder Aufsetztrichtung. Bei einer Dachmontage, bei der die Hauptdurchströmrichtung vertikal verläuft, ist beispielsweise das Modul nach oben oder nach unten aus der Zarge herausziehbar, bzw. einschiebbar oder aufsetzbar.

In einer vorteilhaften Ausführung der Erfindung ist das Wärmetauscheraggregat mit einem Fördermittel zum Durchleiten von Fluiden durch das Wärmetauschermodul ausgestattet.

Dazu kann mindestens ein, zum Beispiel motorbetriebener, Ventilator vorgesehen sein.

Die Ventilatoren für die Abluft und/oder Zuluft können auf der zur Aussenatmosphäre weisenden Seite des Wärmetauschers oder auf der zur Innenatmosphäre weisenden Seite des Wärmetauschers angeordnet sein.

Die Ventilatoren können beispielsweise an der Zarge und/oder an dem Wärmetauschermodul angeordnet sein oder alternativ getrennt von dem Wärmetauschermodul, insbesondere an der Aussenseite des Gebäudes oder in einer jeweiligen Wohneinheit, platziert sein.

Der Ventilator kann einseitig saugend sein. Er ist bevorzugt doppelseitig saugend und fördert damit die Luft, die von der Gebäudeinnenseite zur Gebäudeaussenseite strömt, sowie die Luft, die von der Gebäudeaussenseite in das Gebäude hineinströmt.

Die Zarge und das Wärmetauschermodul weisen bevorzugt auch elektrische Leitungen und/oder elektrische Verbindungsmittel, insbesondere zum elektrischen Verbinden der Fördermittel, auf, beispielsweise wenn ein Ventilator mit dem Wärmetauschermodul verbunden und mit diesem zusammen aus der Zarge entnehmbar ist.

In einer weiteren vorteilhaften Ausführung der Erfindung ist das Wärmetauscheraggregat mit mindestens einem Filter zur Reinigung der Fluide ausgestattet.

Der Filter ist bevorzugt auswechselbar.

Ein Filter kann am Modul angebracht sein und mit diesem zusammen aus der Zarge entnehmbar sein.

Alternativ kann ein Filter an der Zarge angebracht sein.

Der Filter kann zum Beispiel zu Wartungs- und/oder Reinigungszwecken separat aus dem Modul oder der Zarge entnehmbar sein.

Vorteilhafterweise weist die Zarge Leitungsstutzen auf, die einerseits mit dem einen gebäudeinnenseitigen Leitungssystem und andererseits mit den Anschlüssen des Wärmetauschermoduls verbindbar sind.

Bei einer Verbindung zwischen Wärmetauschermodul und Zarge wird gleichzeitig eine Verbindung zwischen dem Zuluftanschluss und dem Abluftanschluss des Wärmetauschers und den gebäudeinnenseitigen Leitungen hergestellt.

In den Leitungsstutzen der Zarge können Filter vorgesehen sein.

Da die Zuluft- und Abluftleitungen im montierten Zustand auf der Gebäudeinnenseite verlaufen, ist ein gewisser Frostschutz automatisch gewährleistet.

Bei sehr tiefen Aussentemperaturen besteht die Gefahr, dass die aus einem Gebäudeinneren abgesaugte Abluft in dem Wärmetauscher durch die Außenluft auf Frosttemperatur abgekühlt wird und sich fortluftseitig in dem Wärmetauscher Eis bildet. Der Wärmetauscher könnte zufrieren, so dass die Raumlüftung außer Betrieb gesetzt wird.

Aus dem Stand der Technik ist bekannt, dass beispielsweise ein Bypass zum Vorbeileiten der kalten Außenluft am Wärmetauscher vorgesehen sein kann, um das Einfrieren des Wärmetauschers zu verhindern. Alternativ kann ein Vorheizregister zum Erwärmen der kalten Außenluft in ein Wärmetauschermodul integriert werden.

Energetisch und bautechnisch ist es allerdings günstiger, wenn die Abluft beheizt wird.

In einer bevorzugten Ausführung der Erfindung ist das Wärmetauscheraggregat mit einer Heizvorrichtung zum Temperieren der Fluide ausgestattet.

Die Heizvorrichtung kann im Wärmetauscher angeordnet sein. Bevorzugt ist eine Heizvorrichtung zum Erwärmen der Abluft im Abluftanschluss des Wärmetauschermoduls oder in der Zarge angeordnet.

Insbesondere ist es vorteilhaft, wenn eine geregelte Beheizung der Abluft vorgenommen wird.

Ein Messfühler kann feststellen, ob ein Gefrieren des Abluftkondensats droht. Dazu kann beispielsweise eine Temperaturmessung der Fortluft, eine Druckmessung oder eine Durchflussmessung vorgenommen werden. Es kann beispielsweise erfasst werden, ob der Abluftventilator gegen einen Widerstand arbeitet, der durch gefrierendes Kondensat entsteht.

Die Abluft wird dann nur gerade so stark beheizt, dass ein Zufrieren verhindert wird. Auf diese Weise wird eine optimale Rückgewinnung der Wärme auch in kritischen Kälteperioden ermöglicht. Gleichzeitig mit dem Beheizen der Abluft wird indirekt, bzw. passiv, die Zuluft vorgewärmt, da Zuluft- und Abluftleitungen nicht gegeneinander isoliert sein müssen.

In einer weiteren vorteilhaften Ausführung der Erfindung wird das Wärmetauscheraggregat mit einer Temperaturregelung ausgestattet.

Die der Erfindung zugrunde liegende Aufgabe wird ausserdem gelöst durch ein Wärmetauschermodul zur Bildung eines Wärmetauscheraggregats wie oben beschrieben.

Das Wärmetauschermodul umfasst mindestens einen Wärmetauscher, wobei das Wärmetauschermodul ausserdem ein Gehäuse aufweist. Der Wärmetauscher weist mindestens einen Zuluft-anschluss und mindestens einen Abluftanschluss auf, welche mit gebäudeinnenseitigen Leitungen verbindbar sind, sowie mindestens einen Fortluftanschluss und mindestens einen Aussenluftanschluss.

Das Wärmetauschermodul, insbesondere das Gehäuse des Wärmetauschermoduls, weist eine zu einer an der Zarge befindlichen Dichtfläche komplementäre Dichtfläche auf.

Das Wärmetauschermodul ist somit mit einer Zarge, insbesondere einer Zarge, die in eine Gebäudehülle integrierbar ist, hermetisch verbindbar.

Das Wärmetauschermodul kann bedarfsgerecht ausgelegt sein. Es kann einen oder mehrere Wärmetauscher umfassen, je nach dem, wie viele Innenraumeinheiten versorgt werden sollen.

Die der Erfindung zugrunde liegende Aufgabe wird ausserdem gelöst durch eine Wärmetauscheranordnung, mit einem Wärmetauscheraggregat wie oben beschrieben, wobei die Zarge in eine Gebäudehülle integriert ist.

Die Zarge kann während der Errichtung des Gebäudes in die Gebäudehülle integriert werden. Sie kann auch nachträglich in eine Gebäudehülle eingebaut werden.

Die Zarge kann Steckplätze für einen oder mehrere Wärmetauschermodule umfassen.

Die Steckplätze können von Wärmetauschermodulen und/oder von Blindstücken besetzt sein. Die Verbindung zwischen den Blindstücken und der Zarge ist so ausgelegt, dass kein Wärmetransfer durch die Blindstücke oder die Schnittstelle zwischen dem Blindstück und der Zarge erfolgt.

In einer vorteilhaften Ausführung der Erfindung verfügt die Wärmetauscheranordnung ausserhalb der Gebäudehülle über eine Wetterschutzabdeckung. Die Wetterschutzabdeckung verhindert das Eindringen von Schmutz und/oder Regen in den Wärmetauscher.

In einer weiteren vorteilhaften Ausführung der Erfindung ist die Wärmetauscheranordnung am Ende eines gebäudeseitig vorhandenen Schachts, zum Beispiel eines Kamins, montiert.

Die Zarge bildet dann das Endstück des gebäudeseitig vorhandenen Schachts.

Die Zarge kann mit einer guten Isolierung als Adapter zwischen den gebäudeseitig vorhandenen Leitungen und dem Wärmtauschermodul wirken. Sie kann so ausgestaltet sein, dass unabhängig von den baulichen Gegebenheiten ein praktikabler Zugang zu den Wärmetauschermodulen ermöglicht wird.

Die Zarge kann dazu beispielsweise einen Hals aufweisen, der die Gebäudehülle nach aussen verlängert und der geknickt ist oder um ein aussenseitig angebrachtes Gebäudeteil herumführt.

Nachfolgend wird die Erfindung in Ausführungsbeispielen anhand von Zeichnungen näher erläutet.

Es zeigen:
- Figur 1: ein erstes Beispiel für eine Wärmetauscheranordnung in perspektivischer Ansicht;
- Figur 2: einen ersten Längsschnitt durch ein erstes Beispiel für ein Wärmetauscheraggregat mit einem ersten Beispiel für ein Wärmetauschermodul;
- Figur 3: einen zweiten Längsschnitt senkrecht zum ersten Längsschnitt durch das erste Beispiel für ein Wärmetauscheraggregat;
- Figur 4: einen ersten Längsschnitt durch ein zweites Beispiel für ein Wärmetauschermodul mit einem zweiten Beispiel für ein Wärmetauschermodul;
- Figur 5: einen zweiten Längsschnitt senkrecht zum ersten Längsschnitt durch das zweite Beispiel für ein Wärmetauschermodul;
- Figur 6: einen ersten Längsschnitt durch ein drittes Beispiel für ein Wärmetauschermodul;
- Figur 7: einen zweiten Längsschnitt senkrecht zum ersten Längsschnitt das dritte Beispiel für ein Wärmetauschermodul;
- Figur 8: einen Querschnitt durch das dritte Beispiel für ein Wärmetauschermodul in einer Schnittebene entlang der Schnittlinie A-A aus Figur 7;
- Figur 9: einen Längsschnitt durch ein weiteres Beispiel für ein Wärmetauscheraggregat;
- Figuren 10a, 10b, 10c: schematisch unterschiedliche Varianten für eine Integration einer Zarge in eine Gebäudehülle;
- Figur 11: ein weiteres Beispiel für ein Wärmetauscheraggregat in perspektivischer Ansicht;
- Figur 12: einen Längsschnitt durch ein weiteres Beispiel für ein Wärmetauscheraggregat;
- Figuren 13a, 13b, 13c: Querschnitte durch das selbe Beispiel für ein Wärmetauschermodul in Schnittebenen entlang der Schnittlinien A-A, B-B und C-C aus Figur 12;
- Figur 14: einen Längsschnitt durch ein weiteres Beispiel für ein Wärmetauscheraggregat.

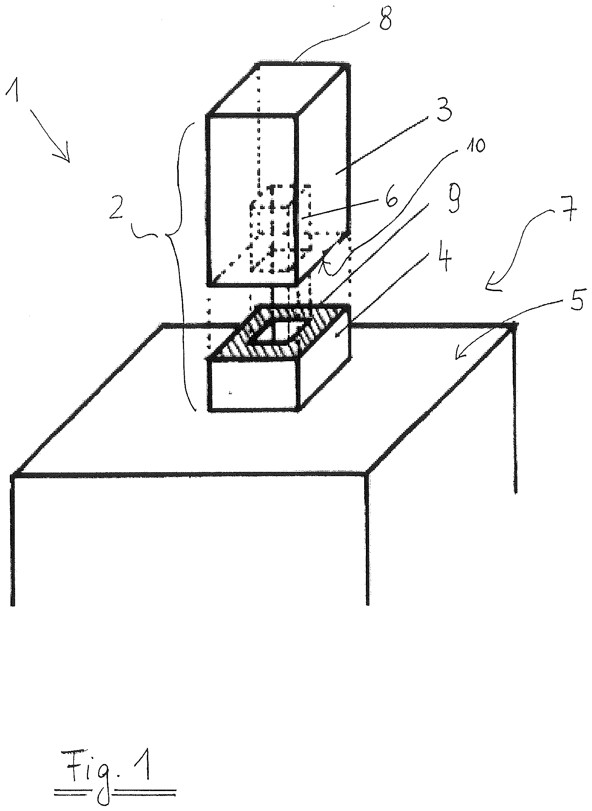

Figur 1 zeigt ein erstes Beispiel für eine Wärmetauscheranordnung 1 mit einem Wärmetauscheraggregat 2.

Das Wärmetauscheraggregat 2 weist ein Wärmetauschermodul 3 und eine Zarge 4 auf, die in eine Gebäudehülle 5 integriert ist.

Das Wärmetauschermodul 3 umfasst einen in der Figur nur schematisch angedeuteten Wärmetauscher 6 für die Durchleitung von Fluiden zwischen einer Innenatmosphäre und einer Aussenatmosphäre 7.

Das Wärmetauschermodul 3 weist ein Gehäuse 8 auf.

Das Gehäuse 8 des Wärmetauschermoduls 3 weist eine zu einer an der Zarge 4 befindlichen Dichtfläche 9 komplementäre Dichtfläche 10 auf.

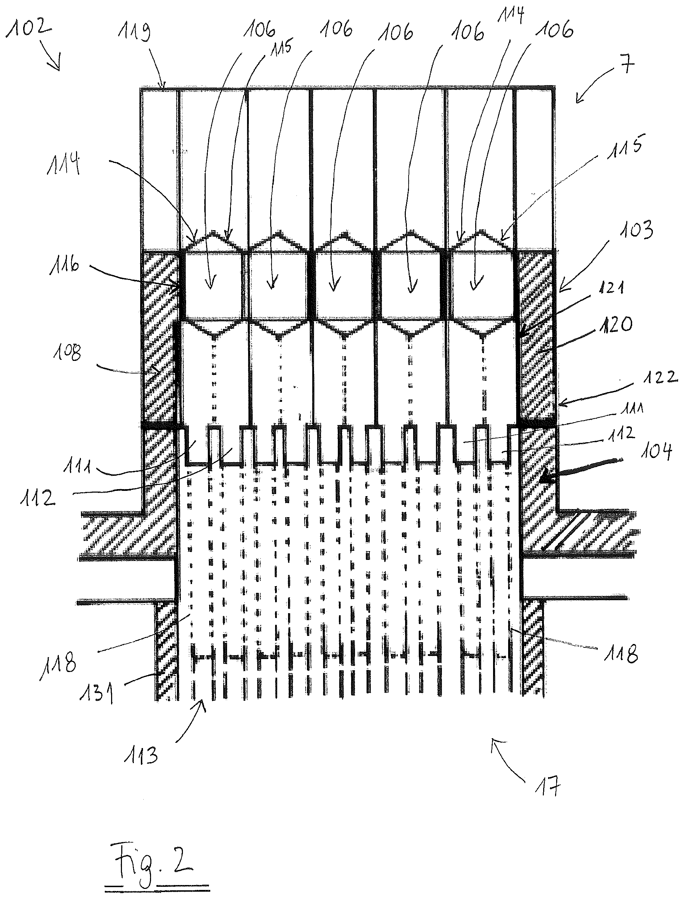

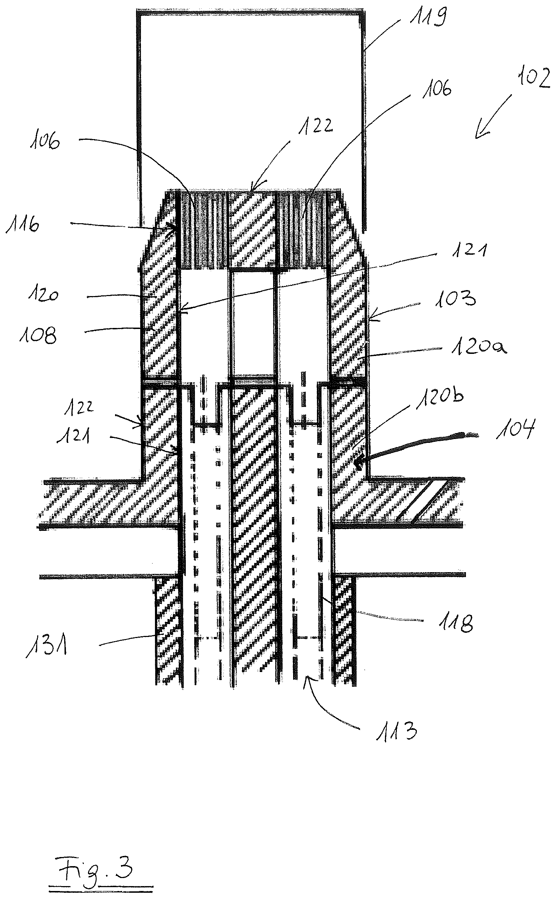

Figur 2 zeigt einen ersten Längsschnitt durch ein erstes Beispiel für ein Wärmetauscheraggregat 102, Figur 3 zeigt einen zweiten Längsschnitt senkrecht zum ersten Längsschritt durch dasselbe Beispiel.

Das Wärmetauscheraggregat 102 umfasst eine Zarge 104 und ein Wärmetauschermodul 103.

In dem Wärmetauschermodul 103 sind insgesamt zehn Wärmetauscher 106 angeordnet, wobei zwei Reihen mit jeweils fünf Wärmetauschern 106 vorgesehen sind.

Jeder Wärmetauscher 106 weist einen Zuluftanschluss 111 und einen Abluftanschluss 112 auf, welche mit gebäudeinnenseitigen Leitungen 113 verbindbar sind.

Jeder Wärmetauscher 106 weist ausserdem einen Fortluftanschluss 114 und einen Aussenluftanschluss 115 auf.

Das Gehäuse 108 des Wärmetauschermoduls 103 schliesst mit Gehäusewandabschnitten 116 in einem Bereich zwischen der Innenatmosphäre 17 und der Aussenatmosphäre 7 derart an den Wärmetauscher 106 an, dass der Zuluftanschluss 111 und der Abluftanschluss 112 in der Innenatmosphäre 17 münden, sowie der Fortluftanschluss 114 und der Aussenluftanschluss 115 in der Aussenatmosphäre 7 münden.

Die Zarge 104 weist Leitungsstutzen 118 auf, die einerseits mit den gebäudeinnenseitigen Leitungen 113 und andererseits mit den Anschlüssen 111, 112 des Wärmetauschermoduls 103 verbunden sind.

Das Wärmetauscheraggregat 103 verfügt über eine Wetterschutzabdeckung 119, welche das Eindringen von Regen, Schnee und Schmutz in die Fortluftanschlüsse 114 und die Aussenluftanschlüsse 115 verhindert.

Das Wärmetauscheraggregat 102 weist eine thermische Isolierung 120 auf, mit einer Innenseite 121, die zur Innenatmosphäre 17 weist, und einer Aussenseite 122, die zur Aussenatmosphäre 7 weist.

Die Isolierung 120 und die Wärmetauscher 106 sind so angeordnet, dass die Zuluftanschlüsse 111 und die Abluftanschlüsse 112 auf der Innenseite 121 der Isolierung 120 liegen und die Fortluftanschlüsse 114 sowie die Aussenluftanschlüsse 115 auf der Aussenseite 122 der Isolierung 120 liegen.

Ein Teil 120a der Isolierung 120 ist als Beschichtung an dem Gehäuse 108 des Wärmetauschermoduls 103 angebracht ist, und ein Teil 120b der Isolierung 120 ist als Beschichtung an der Zarge 104 angebracht, sodass ein Wärmetransfer von der Innenatmosphäre 17 zur Aussenatmosphäre 7 und umgekehrt ausserhalb der Wärmetauscher 106 weitestgehend verhindert ist.

Die gebäudeinnenseitigen Leitungen 113 führen zu den jeweiligen Wohneinheiten, beispielsweise durch einen Schacht 131 im Sanitärbereich. Mit einem zentral angeordneten Wärmetauscheraggregat 102 können somit 10 Wohneinheiten individuell versorgt werden. Es werden also die Vorteile der Sammellösung mit den Vorteilen der Einzelsteuerung verbunden.

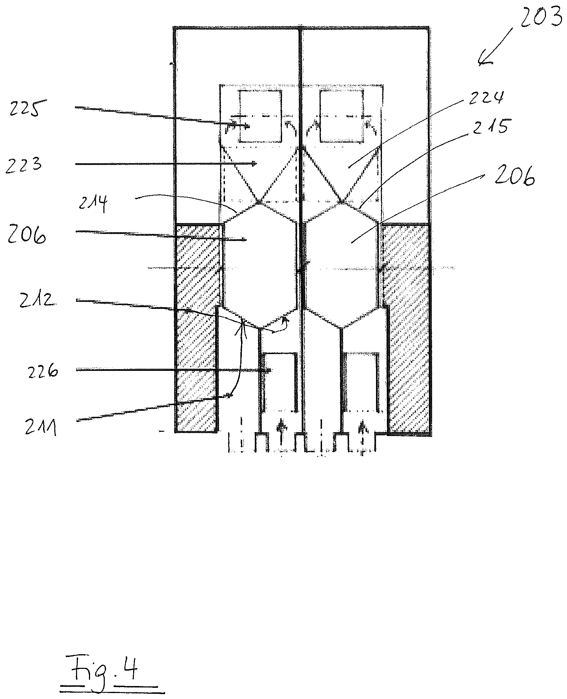

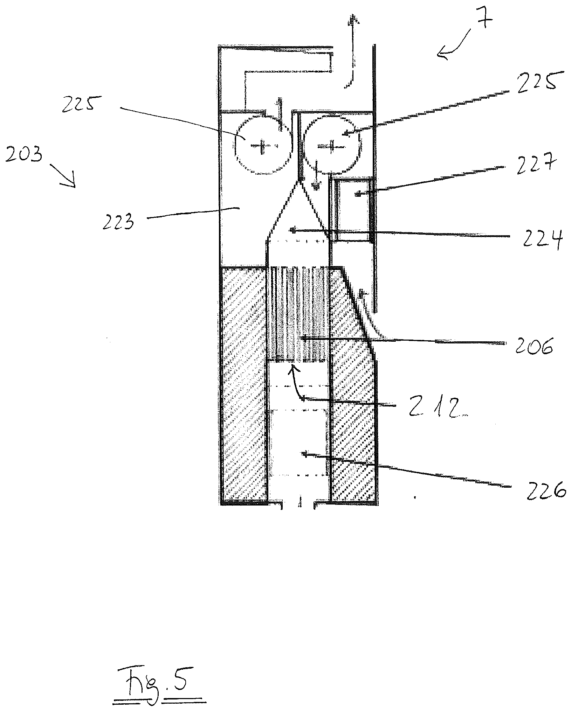

Figur 4 zeigt einen ersten Längsschnitt durch ein zweites Beispiel für ein Wärmetauschermodul 203, Figur 5 zeigt einen zweiten Längsschnitt senkrecht zum ersten Längsschritt durch dasselbe Beispiel.

In dem Wärmetauschermodul 203 sind zwei Wärmetauscher 206 angeordnet.

Die Fortluftanschlüsse 214 und Aussenluftanschlüsse 215 münden in Fortluftleitungen 223 und Aussenluftleitungen 224, in denen jeweils Fördermittel 225 in Form von Ventilatoren zum Durchleiten der Luft durch die jeweiligen Wärmetauschermodule 203 angeordnet sind.

In den Abluftanschlüssen 212 sind Filter 226 zum Reinigen der Luft, die aus dem Gebäude ausströmt, angebracht.

In den Aussenluftleitungen 224 sind ebenfalls Filter 227 zum Reinigen der in das Gebäude eingesaugten Luft vorgesehen.

Die Fortluftleitungen 223 und Aussenluftleitungen 224 leiten die aus- und einströmende Luft derart um, dass in die Aussenatmosphäre 7 ausströmende und möglicherweise verbrauchte Luft nicht sofort wieder in das Wärmetauschermodul 203 eingesaugt wird.

Im vorliegenden Beispiel sind die Ventilatoren 225 auf der der Aussenatmosphäre 7 zugewandten Seite des Wärmetauschers 206 angeordnet.

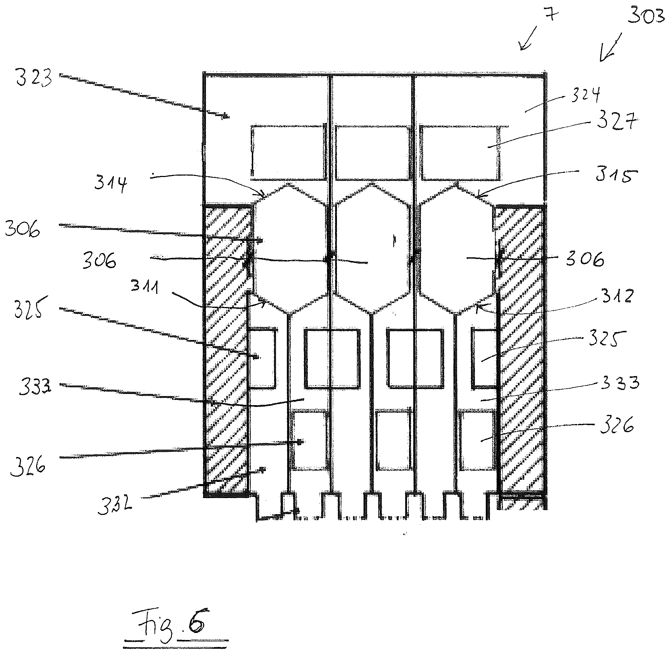

Eine konstruktive Alternative ist die Anordnung der Ventilatoren auf der der Innenatmosphäre 17 zugewandten Seite des Wärmetauschers 306, wie in Figuren 6, 7 und 8 gezeigt ist.

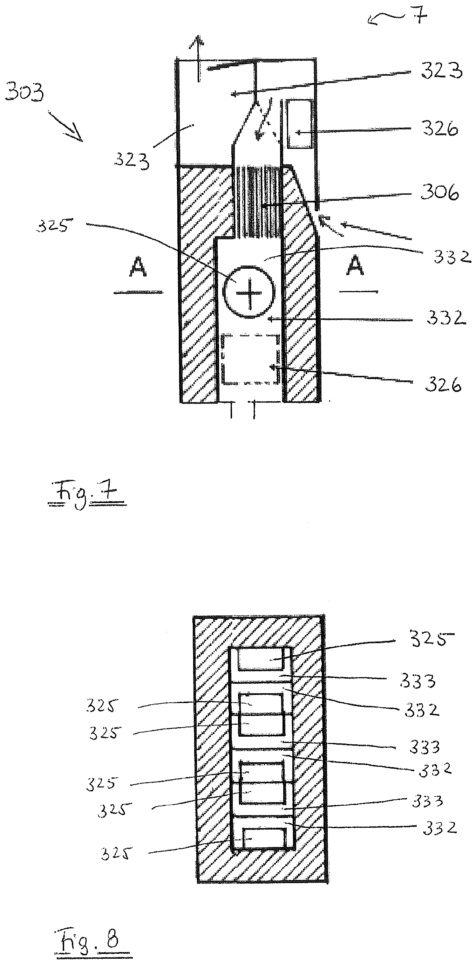

Figur 6 zeigt einen ersten Längsschnitt durch ein drittes Beispiel für ein Wärmetauschermodul 303, Figur 7 zeigt einen zweiten Längsschnitt senkrecht zum ersten Längsschritt durch dasselbe Beispiel.

Figur 8 zeigt dasselbe Beispiel in einer Schnittebene entlang der Schnittlinie A-A aus Figur 7.

In dem Wärmetauschermodul 303 sind drei Wärmetauscher 306 angeordnet.

Die Fortluftanschlüsse 314 und Aussenluftanschlüsse 315 münden in Fortluftleitungen 323 und Aussenluftleitungen 324, welche die aus- und einströmende Luft derart umleiten, dass in die Aussenatmosphäre 7 ausströmende und möglicherweise verbrauchte Luft nicht sofort wieder in das Wärmetauschermodul 303 eingesaugt wird.

In den Zuluftleitungen 332, die an die Zuluftanschlüsse 311 anschliessen und in den Abluftleitungen 333, die an die Abluftanschlüsse 312 anschliessen, sind jeweils Fördermittel 325 in Form von Ventilatoren zum Durchleiten der Luft durch die jeweiligen Wärmetauschermodule 303 angeordnet.

In den Abluftleitungen 333 sind ausserdem Filter 326 zum Reinigen der Luft, die aus dem Gebäude ausströmt, angebracht.

In den Aussenluftleitungen 324 sind ebenfalls Filter 327 zum Reinigen der in das Gebäude eingesaugten Luft vorgesehen.

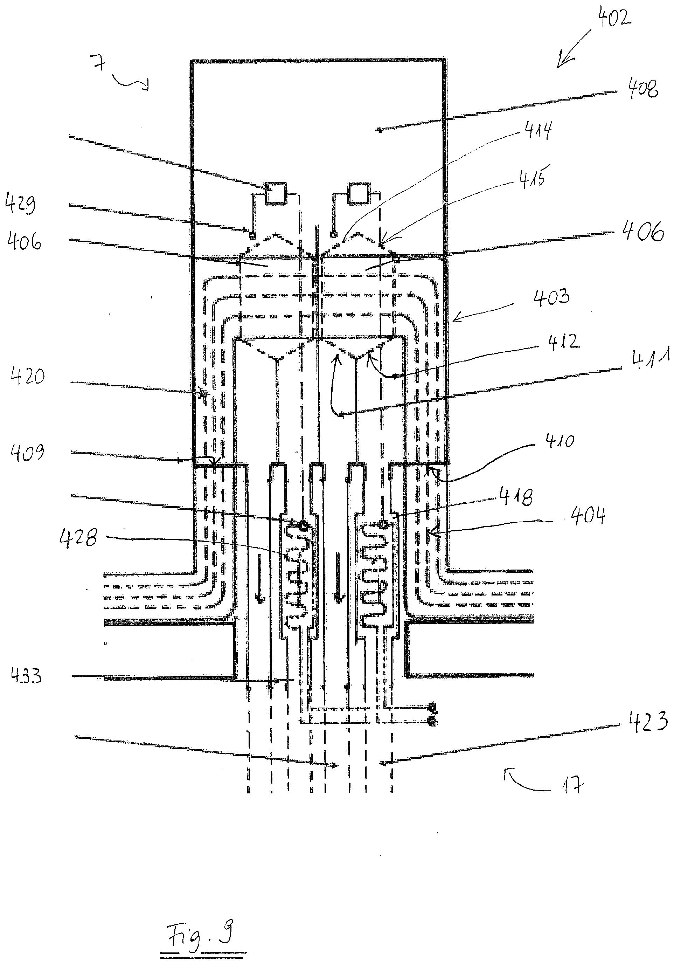

Figur 9 zeigt einen Längsschnitt durch ein viertes Beispiel für ein Wärmetauscheraggregat 402.

Das Wärmetauscheraggregat 402 weist eine Zarge 404 und ein Wärmetauschermodul 403 mit zwei Wärmetauschern 406 auf.

An der Zarge 404 und an dem Gehäuse 408 ist jeweils Isolierung 420 angebracht, die an den Dichtflächen 409, 410 hermetisch aneinander stösst und so an die Wärmetauscher 406 anschliesst, dass die Zuluftanschlüsse 411 und die Abluftanschlüsse 412 in der Innenatmosphäre 17 münden, während die Fortluftanschlüsse 414 und die Aussenluftanschlüsse 415 in der Aussenatmosphäre 7 münden.

Ein Wärmeaustausch findet im Wesentlichen ausschliesslich in den Wärmetauschern 406 statt, da die Isolierung 420 dafür sorgt, dass die Isothermen quasi kontinuierlich verlaufen und die Temperatur des Gebäudeinneren bis unmittelbar an die Wärmetauscher 406 heranreicht.

Das vorliegende Wärmetauscheraggregat 402 ist zusätzlich mit Heizvorrichtungen 428 zum Temperieren der Fluide ausgestattet.

Die Heizvorrichtungen 428 sind in den Leitungsstutzen 418 der Zarge 404 angeordnet, die mit gebäudeinnenseitigen Abluftleitungen 43
3 verbunden sind.

Mit den Heizvorrichtungen 428 kann die Temperatur der Abluft soweit erhöht werden, dass die Fortluft nicht bis zu Temperaturen unterhalb der Eistemperatur abgekühlt.

Die Temperierung der Abluft kann zum Beispiel mit einem elektrischen Heizstrahler erfolgen oder über ein Rohrsystem, das ein Temperierfluid führt.

Die Heiztemperatur kann in Abhängigkeit der Fortlufttemperatur eingestellt werden, die über Messfühler 429 erfasst wird. Eine Steuerung 430 sorgt dafür, dass die Temperierung zum Beispiel erst einsetzt, wenn die Fortlufttemperatur unter null Grad fällt.

Alternativ kann die Temperierung einsetzen, wenn ein Gefrieren des Kondensats einsetzt, wenn beispielsweise der Durchfluss durch den Wärmetauscher beeinträchtigt ist.

Zusätzlich kann eine Regelung vorgesehen sein, welche die Heiztemperatur in Abhängigkeit der Fortlufttemperatur einstellt. Alternativ wird die Heizleistung in Abhängigkeit von dem Temperaturunterschied zwischen der Fortluft- und der Abluft geregelt.

Es wird demnach gezielt beheizt, sodass die Lüftung auch bei Tiefsttemperaturen in Kälteperioden nicht abgestellt werden muss. Als Nebeneffekt wird dabei auch die Zuluft indirekt miterwärmt.

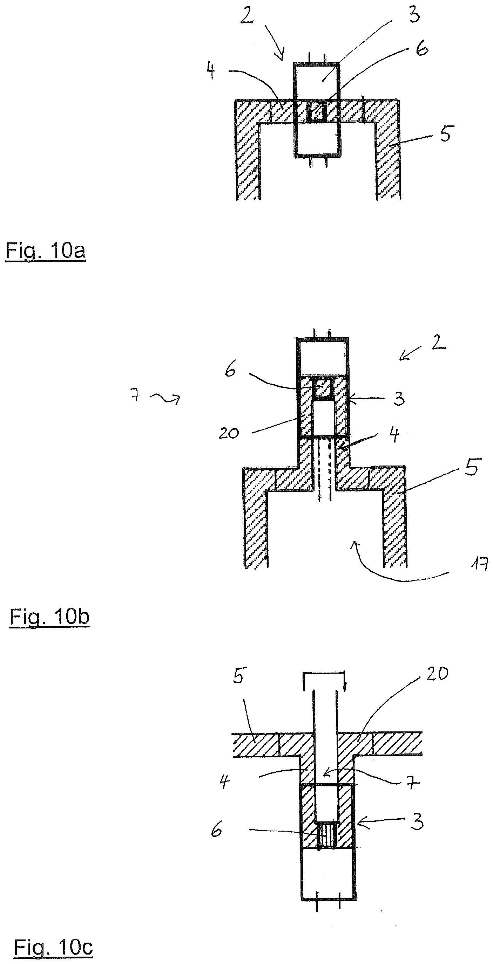

Die Figuren 10a, 10b und 10c zeigen schematisch unterschiedliche Varianten für eine Integration von Zargen 4 in eine Gebäudehülle 5.

In Figur 10a bildet die Zarge 4 eine Fortsetzung der Gebäudehülle 5 auf gleicher Höhe. Das Wärmtauschermodul 3 kann in die Gebäudehülle 5 eingefügt werden, sodass der Wärmetauscher 6 im Durchstosspunkt durch die Gebäudehülle 5 angeordnet ist.

Bautechnisch ist diese Lösung wenig praktikabel, da das Wärmetauscheraggregat 2 mit der Gebäudekonstruktion in Konflikt gerät und das Wärmetauschermodul 3 schlecht zugänglich ist.

Figur 10b zeigt eine erfindungsgemässe Alternative, bei welcher das Wärmetauscheraggregat 2 in die Aussenatmosphäre 7 weist. Die Zarge 4 ist so in die Gebäudehülle 5 integriert, dass sie eine Ausbuchtung in die Aussenatmosphäre 7 bildet. Die Isolierung 20 ist so angebracht, dass die Innenatmosphäre 17 sich in das Wärmetauschermodul 3 hinein bis zum Wärmetauscher 6 erstreckt. Das Wärmetauschermodul 3 ist einerseits von aussen zugänglich und andererseits liegt der Wärmetauscher 6 genau zwischen der Aussenatmosphäre 7 und der Innenatmosphäre 17.

Figur 10c zeigt eine erfindungsgemässe Alternative, bei welcher das Wärmetauscheraggregat 2 nach innen weist. Die Zarge 4 ist so in die Gebäudehülle 5 integriert, dass sie eine Ausbuchtung in die Innenatmosphäre 17 bildet und einen Teil der Aussenatmosphäre 7 nach inne führt. Die Isolierung 20 ist so angebracht, dass die Aussenatmosphäre 7 sich in das Wärmetauschermodul 3 hinein bis zum Wärmetauscher 6 erstreckt. Das Wärmetauschermodul 3 ist von innen zugänglich, aber gleichzeitig liegt der Wärmetauscher 6 dennoch genau zwischen der Aussenatmosphäre 7 und der Innenatmosphäre 17.

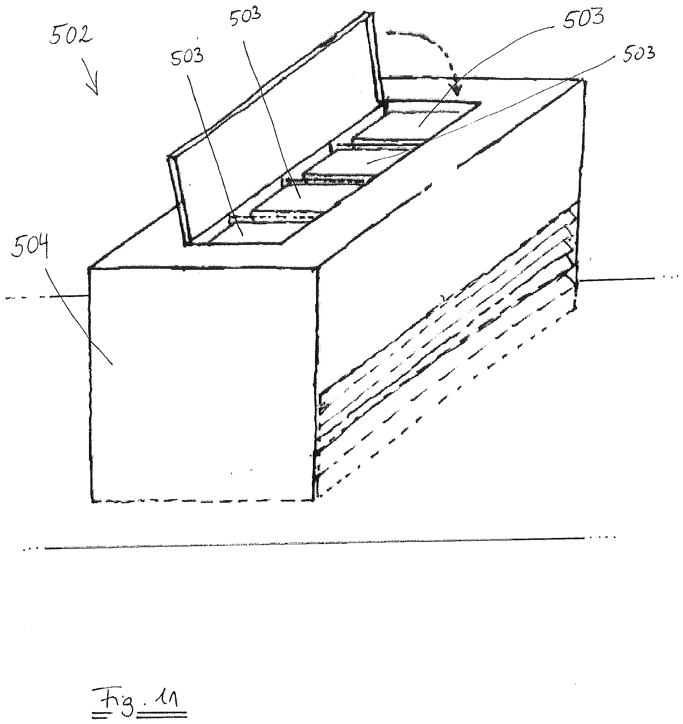

Figur 11 zeigt ein weiteres Beispiel für ein Wärmetauscheraggregat 502 in perspektivischer Ansicht.

Das Wärmetauscheraggregat 502 besitzt eine Zarge 504 und vier separat entnehmbare Wärmetauschermodule 503. Die Wärmetauschermodule können beispielsweise jeweils einen oder mehrere Wärmetauscher für eine Wohneinheit umfassen, so dass die Lüftungen für die jeweiligen Wohneinheiten individuell gewartet werden können.

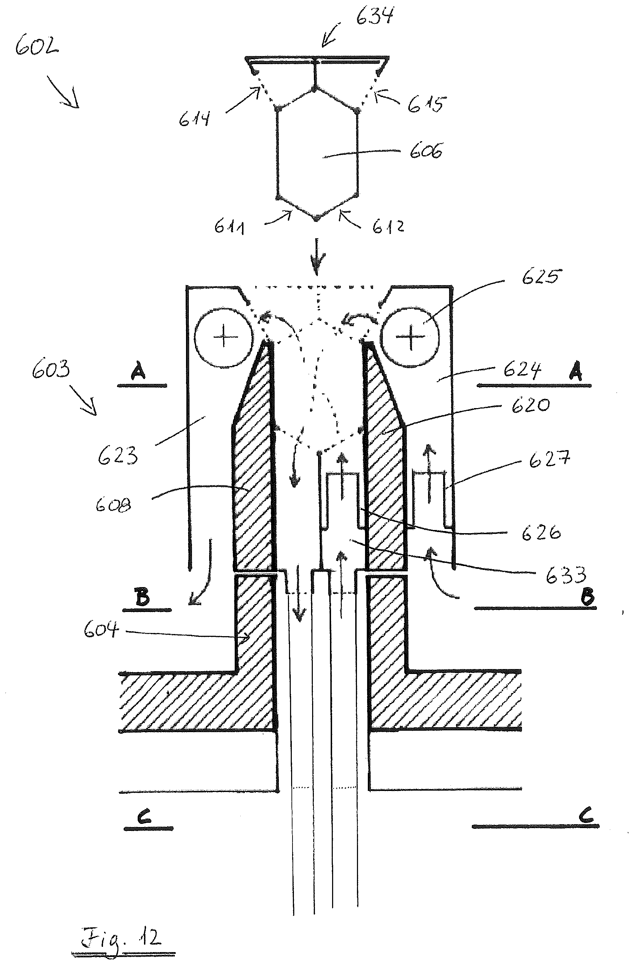

Figur 12 zeigt einen Längsschnitt eines weiteren Beispiels für ein Wärmetauscheraggregat 602 mit einem herausnehmbaren Wärmetauscher 606.

Das Wärmetauscheraggregat 602 umfasst ein Wärmetauschermodul 303, in dem ein oder mehrere Wärmetauscher 606 angeordnet werden können, und eine Zarge 604.

Die Fortluftanschlüsse 614 und Aussenluftanschlüsse 615, sowie die Zuluftanschlüsse 611 und die Abluftanschlüsse 612 sind mit nicht explizit dargestellten Dichtflächen versehen, die einen hermetischen Verschluss mit an dem Gehäuse 608 des Wärmetauschermoduls 603 vorgesehenen komplementären Dichtflächen bilden.

In den Fortluftleitungen 623 und Aussenluftleitungen 624 sind jeweils Fördermittel 625 in Form von Ventilatoren zum Durchleiten der Luft durch die jeweiligen Wärmetauschermodule 603 angeordnet.

In den Aussenluftleitungen 624 sind ausserdem Filter 627 zum Reinigen der in das Gebäude eingesaugten Luft vorgesehen.

Zudem sind Filter 626 zum Reinigen der Luft, die aus dem Gebäude ausströmt, in den der Abluftleitung 633 angebracht.

Der Wärmetauscher 606 kann aus dem Wärmetauschermodul 603 zu Wartungs- und Reinigungszwecken herausgezogen werden, ohne dass das gesamte Modul entfernt werden muss, was insbesondere dann zweckmässig ist, wenn das Wärmetauschermodul 603 wie im vorliegenden Fall mit elektrischen Bauteilen und elektrischen Anbindungen ausgestattet ist.

Der Wärmetauscher 606 umfasst einen eine Abdeckung 634 mit einem nicht explizit dargestellten Griff, an welchem der Wärmetauscher 606 aus dem Gehäuse 608 vertikal herausziehbar ist.

Ist der Wärmetauscher 606 entfernt, so ist der in der Abluftleitung 633 befindliche Filter 626 zugänglich, kann kontrolliert, gereinigt und/oder ausgetauscht werden,
ohne dass dafür ein Durchbruch durch die Isolierung 620 geschaffen werden müsste.

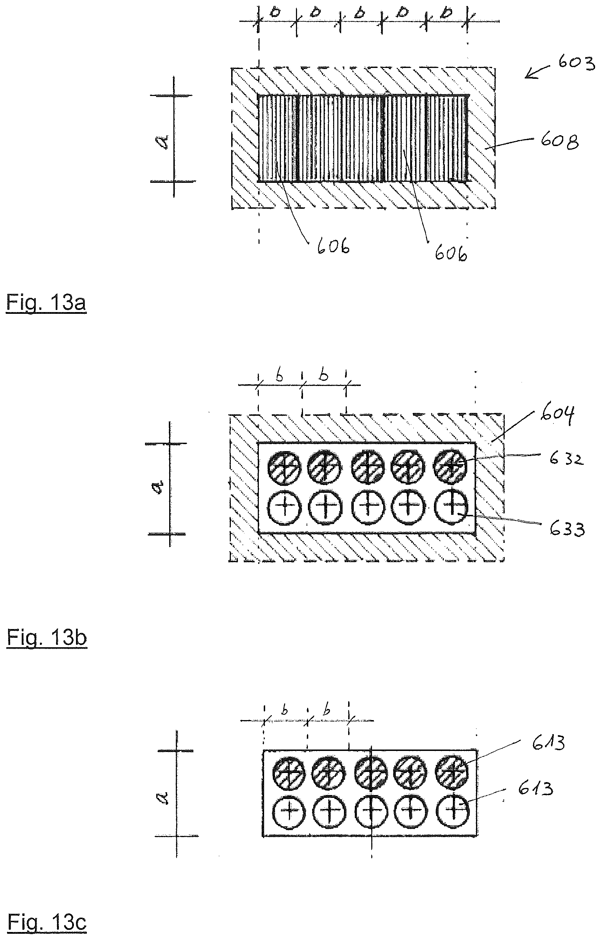

Die Figuren 13a, 13b und 13c zeigen Querschnitte durch dasselbe Beispiel für ein Wärmetauscheraggregat 602 in Schnittebenen entlang der Schnittlinien A-A, B-B und C-C aus Figur 12.

Dabei zeigt Figur 13a eine Schnittebene des Wärmetauschermoduls 603, Figur 13b eine Schnittebene der Zarge 604 und Figur 13d eine Schnittebene der gebäudeseitigen Leitungen 613.

Insgesamt sind fünf Wärmetauscher 606 nebeneinander in einem Gehäuse 608 angeordnet. Die Zuluft- und Abluftanschlüsse der Wärmetauscher 606 münden in Zuluftleitungen 632 und Abluftleitungen 633, die ihrerseits an gebäudeseitigen Leitungen 613 angeschlossen sind.

Da es nicht notwendig ist, die Zuluftleitungen 632 und Abluftleitungen 633 einzeln zu isolieren, weil sie sich in der isolierten Zarge 604 befinden, und die Wärmetauscher 606 kompakt in einem Gehäuse 608 angeordnet sind, bildet sich das Modulmass b, also die maximale Breite der Wärmetauscher 606, direkt auf die Abstände der gebäudeseitigen Leitungen 613 ab.

Der Wirkungsgrad der Wärmetauscher 606, der unmittelbar mit der Austauschfläche zusammenhängt, kann zum Beispiel immer noch über die Tiefe der Wärmetauscher a variiert werden.

Die in der Zarge 604 befindlichen Zuluftleitungen 632 und Abluftleitungen 633 verbinden die Zuluft- und Abluftanschlüsse der Wärmetauscher 606 in geeigneter Weise mit den gebäudeseitigen Leitungen 613.

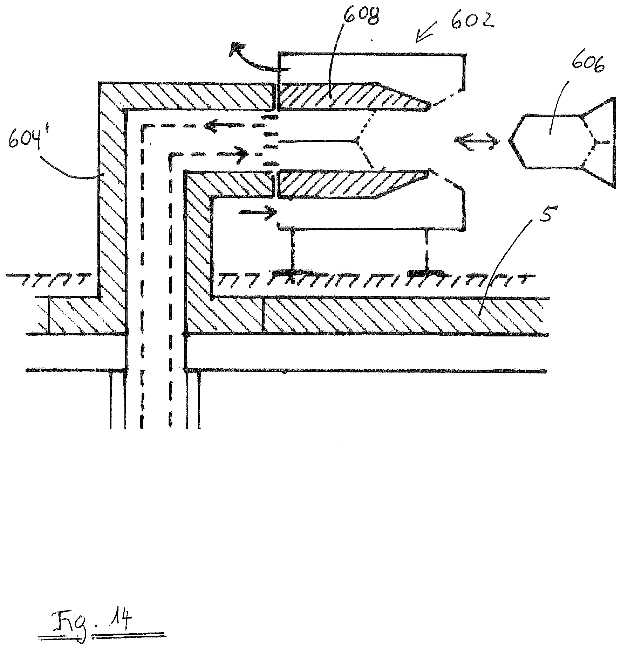

Figur 14 zeigt einen Längsschnitt eines weiteren Beispiels für eine alternative Anordnung eines prinzipiell gleich aufgebauten Wärmetauschermoduls 603 mit einem herausnehmbaren Wärmetauscher 606.

Das Wärmetauschermodul 603 ist auf einer Zarge 604' angeordnet, die eine Richtungsänderung der gebäudeinnenseitigen Fluidströme bewirkt, im vorliegenden Fall durch einen um 90° abknickenden Hals.

Das Wärmetauschermodul 603 ist derart an die Zarge angesetzt oder eingeschoben, dass der Wärmetauscher 606 parallel zur Gebäudehülle 5 zum Beispiel, bei einer Montage auf einem Flachdach, horizontal oder, bei einer Montage an einer Seitenwand, vertikal aus dem Gehäuse 608 entnehmbar ist.

## Patentansprüche

1. Wärmetauscheraggregat, mit mindestens einem Wärmetauschermodul (3; 103; 203; 303; 403; 503; 603), das mindestens einen Wärmetauscher (6; 106; 206; 306; 406; 606) umfasst für die Durchleitung von Fluiden zwischen einer Innenatmosphäre (17) und einer Aussenatmosphäre (7), insbesondere einen Kreuzstrom- oder Gegenstromwärmetauscher, wobei das Wärmetauschermodul (3; 103; 203; 303; 403; 503; 603) ein Gehäuse (8; 108; 408) aufweist, und der Wärmetauscher (6; 106; 206; 306; 406; 606) mindestens einen Zuluftanschluss (111; 211; 311; 411) und mindestens einen Abluftanschluss (112; 212; 312; 412) aufweist, welche insbesondere mit gebäudeinnenseitigen Leitungen (113) verbindbar sind, sowie mindestens einen Fortluftanschluss (114; 214; 314; 614) und mindestens einen Aussenluftanschluss (115; 215; 315; 615), wobei das Wärmetauscheraggregat (2; 102; 402; 502; 602) ausserdem mindestens eine Zarge (4; 104; 404; 504; 604; 604') aufweist, die in eine Gebäudehülle (5) integrierbar ist, die mit dem Wärmetauschermodul (3; 103; 203; 403; 503; 606), insbesondere lösbar, verbindbar ist, das Gehäuse (8; 108; 408; 608) mit wenigstens einem Gehäusewandabschnitt (116) und/oder die Zarge (4; 104; 404; 504; 604; 604') mit wenigstens einem Zargenabschnitt in einem Bereich zwischen der Innenatmosphäre (17) und der Aussenatmosphäre (7) derart an den Wärmetauscher (6; 106; 206; 306; 406; 606) anschliessen, dass im montierten Zustand der Zuluftanschluss (111; 211; 311; 411; 611) und der Abluftanschluss (112; 212; 312; 412; 612) in der Innenatmosphäre (17) münden, sowie der Fortluftanschluss (114; 214; 314; 614) und der Aussenluftanschluss (115; 215; 315; 615) in der Aussenatmosphäre (7) münden, **dadurch gekennzeichnet, dass**
die Zarge so ausgeführt ist, dass sie die Gebäudehülle nach aussen hin erweitert, so dass die in die Gebäudehülle integrierte Zarge eine Ausbuchtung in die Aussenatmosphäre bildet, das Wärmetauscheraggregat in die Aussenatmosphäre weist, die Isolierung so angebracht ist, dass die Innenatmosphäre sich in das Wärmetauschermodul hinein bis zum Wärmetauscher erstreckt und das Wärmetauschermodul einerseits von aussen zugänglich ist und andererseits liegt der Wärmetauscher (6) genau zwischen der Aussenatmosphäre (6) und der Innenatmosphäre (17),
oder
dass die Zarge so ausgeführt ist, dass sie die Gebäudehülle in Richtung des Gebäudeinneren erweitert, so dass die in die Gebäudehülle integrierte Zarge eine Ausbuchtung in die Innenatmosphäre bildet, einen Teil der Aussenatmosphäre nach innen führt, das Wärmetauscheraggregat nach innen weist, die Isolierung so angebracht ist, dass die Aussenatmosphäre sich in das Wärmetauschermodul hinein bis zum Wärmetauscher erstreckt und das Wärmetauschermodul von innen zugänglich ist, aber gleichzeitig liegt der Wärmetauscher (6) dennoch genau zwischen der Aussenatmosphäre (7) und der Innenatmosphäre (17).

2. Wärmetauscheraggregat gemäss Anspruch 1, **dadurch gekennzeichnet, dass** zwischen dem Wärmetauschermodul (3; 103; 203; 303; 403; 503; 603), insbesondere dem Gehäuse (8; 108; 408; 608) des Wärmetauschermoduls (3; 103; 203; 303; 403; 503; 603), und der Zarge (4; 104; 404; 504; 604; 604') eine hermetische Verbindung herstellbar ist.

3. Wärmetauscheraggregat gemäss Anspruch 1 oder 2, **dadurch gekennzeichnet, dass** das Wärmetauscheraggregat (2; 102; 402; 502; 602) eine thermische Isolierung (120; 420) aufweist, mit einer Innenseite (121), die im montierten Zustand zur Innenatmosphäre (17) weist, und einer Aussenseite (122), die im montierten Zustand zur Aussenatmosphäre (7) weist, wobei im montierten Zustand die Isolierung (120; 420) und der Wärmetauscher (6; 106; 206; 306; 406; 606) so angeordnet sind, dass der Zuluftanschluss (111; 211; 311; 411; 611) und der Abluftanschluss (112; 212; 312; 412; 612) auf der Innenseite (121) der Isolierung (20; 120; 420; 620) liegen und der Fortluftanschluss (114; 214; 314; 614) sowie der Aussenluftanschluss (115; 215; 315; 615) auf der Aussenseite (122) der Isolierung (120; 420; 620) liegen.

4. Wärmetauscheraggregat gemäss Anspruch 3, **dadurch gekennzeichnet, dass** das der Wärmedurchgangskoeffizient der Isolierung (20; 120; 420; 620) und/oder der hermetischen Verbindung kleiner als 1 W/(m² K), bevorzugt kleiner als 0.5 W/(m² K), weiter bevorzugt kleiner als 0.3 W/(m² K) ist.

5. Wärmetauscheraggregat gemäss einem der Ansprüche 3 oder 4, **dadurch gekennzeichnet, dass** zumindest eine Teil der Isolierung (20; 120; 420) an oder in dem Gehäuse (8; 108; 408) des Wärmetauschermoduls (3; 103; 203; 303; 403; 503; 603) angebracht ist und/oder
zumindest ein Teil der Isolierung (20; 120; 420; 620) an oder in der Zarge (4; 104; 404; 504; 604; 604') angebracht ist,
sodass ein Wärmetransfer von der Innenatmosphäre (17) zur Aussenatmosphäre (7) und umgekehrt ausserhalb des Wärmetauschers (6; 106; 206; 306; 406; 606) weitestgehend verhindert ist.

6. Wärmetauscheraggregat gemäss einem der vorhergehenden Ansprüche, **dadurch gekennzeichnet, dass** das Wärmetauschermodul (3; 103; 203; 303; 403; 503; 603), insbesondere das Gehäuse (8; 108; 408; 608) des Wärmetauschermoduls( 3; 103; 203; 403; 503; 603), und die Zarge (4; 104; 404; 504; 604; 604') zueinander komplementäre Dichtflächen (9, 10) aufweisen.

7. Wärmetauscheraggregat gemäss einem der vorhergehenden Ansprüche, **dadurch gekennzeichnet, dass** das zumindest ein Teil des Wärmetauschermoduls (3; 103; 203; 303; 403; 503; 603), insbesondere das Gehäuse (8; 108; 408; 608), in die Zarge (4; 104; 404; 504; 604; 604') einschiebbar ist, insbesondere in Durchströmrichtung.

8. Wärmetauscheraggregat gemäss einem der vorhergehenden Ansprüche, **dadurch gekennzeichnet, dass** das zumindest ein Teil des Wärmetauschermoduls (3; 103; 203; 303; 403; 503; 603), insbesondere das Gehäuse (8; 108; 408), auf die Zarge (4; 104; 404; 504; 604; 604') aufsetzbar ist.

9. Wärmetauscheraggregat gemäss einem der vorhergehenden Ansprüche, **dadurch gekennzeichnet, dass** das Wärmetauscheraggregat (2) mit einem Fördermittel (225; 325) zum Durchleiten von Fluiden durch das Wärmetauschermodul (3; 203; 303; 603) ausgestattet ist.

10. Wärmetauscheraggregat gemäss einem der vorhergehenden Ansprüche, **dadurch gekennzeichnet, dass** das Wärmetauscheraggregat (2) mit einem Filter (226, 227; 626, 627) zur Reinigung der Fluide ausgestattet ist.

11. Wärmetauscheraggregat gemäss einem der vorhergehenden Ansprüche, **dadurch gekennzeichnet, dass** die Zarge (4; 104; 404) Leitungsstutzen (118; 418) aufweist, die einerseits mit einem gebäudeinnenseitigen Leitungssystem (113) und andererseits mit Anschlüssen des Wärmetauschermoduls (3; 103; 403) verbindbar sind.

12. Wärmetauscheraggregat gemäss einem der vorhergehenden Ansprüche, **dadurch gekennzeichnet, dass** das Wärmetauscheraggregat (402), insbesondere die Zarge (404), mit einer Heizvorrichtung (428) zum Temperieren der Fluide ausgestattet ist.

13. Wärmetauscheranordnung, mit einem Wärmetauscheraggregat (2; 102; 402; 502; 602) gemäss einem der Ansprüche 1 bis 12, **dadurch gekennzeichnet, dass** die Zarge (4; 104; 404; 504; 604; 604') in eine Gebäudehülle (5) integriert ist.

14. Wärmetauscheranordnung gemäss Anspruch 13,
**dadurch gekennzeichnet, dass** die Wärmetauscheranordnung (1) über eine Wetterschutzabdeckung (119) verfügt.

15. Wärmetauscheranordnung gemäss Anspruch 13 oder 14,
**dadurch gekennzeichnet, dass** die Wärmetauscheranordnung (1) am Ende eines gebäudeseitig vorhandenen Schachtes (131), z.B. eines Kamins, montiert ist.

## Claims

1. Heat exchanger unit, having at least one heat exchanger module (3; 103; 203; 303; 403; 503; 603) which has at least one heat exchanger (6; 106; 206; 306; 406); 606) comprises a housing (8; 108; 408) for the passage of fluids between an internal atmosphere (17) and an external atmosphere (7), in particular a cross-flow or counter-flow heat exchanger, the heat exchanger module (3; 103; 203; 303; 403; 503; 603) having a housing (8; 108; 408), and the heat exchanger (6; 106; 206; 306; 406; 606) has at least one supply air connection (111; 211; 311; 411) and at least one exhaust air connection (112; 212; 312; 412), which can be connected in particular to ducts (113) inside the building, and at least one outgoing air connection (114; 214; 314; 614) and at least one fresh air connection (115); 215; 315; 615), wherein the heat exchanger unit (2; 102; 402; 502; 602) also has at least one frame (4; 104; 404; 504; 604; 604') which can be integrated into a building envelope (5) which can be connected, in particular detachably, to the heat exchanger module (3; 103; 203; 403; 503; 606), the housing (8; 108; 408; 608) with at least one housing wall section (116) and/or the frame (4; 104; 404; 504; 604; 604') with at least one frame section in a region between the internal atmosphere (17) and the external atmosphere (7) is connected in such a way to the heat exchanger (6; 106; 206; 306; 406); 606) that, in the assembled state, the supply air connection (111; 211; 311; 411; 611) and the exhaust air connection (112; 212; 312; 412; 612) open out into the internal atmosphere (17), and the outgoing air connection (114; 214; 314; 614) and the fresh air connection (115; 215; 315; 615) open out into the external atmosphere (7), **characterized in that** the frame is designed in such a way that it widens the building envelope towards the outside, so that the frame integrated into the building envelope forms a bulge into the outside atmosphere, the heat exchanger unit points into the outside atmosphere, the insulation is arranged in such a way that the inside atmosphere extends into the heat exchanger module up to the heat exchanger and the heat exchanger module is accessible from the outside on the one hand and on the other hand the heat exchanger (6) lies exactly between the outside atmosphere (6) and the inside atmosphere (17)
or
that the frame is designed in such a way that it widens the building envelope towards the interior of the building, so that the frame integrated into the building envelope forms a bulge into the interior atmosphere, leads a part of the exterior atmosphere inwards, the heat exchanger unit points inwards, the insulation is mounted such that the external atmosphere extends into the heat exchanger module up to the heat exchanger and the heat exchanger module is accessible from the inside, but at the same time the heat exchanger (6) is located exactly between the external atmosphere (7) and the internal atmosphere (17).

2. Heat exchanger unit according to claim 1, **characterized in that** a hermetic connection can be established between the heat exchanger module (3; 103; 203; 303; 403; 503; 603), in particular the housing (8; 108; 408; 608) of the heat exchanger module (3; 103; 203; 303; 403; 503; 603), and the frame (4; 104; 404; 504; 604; 604').

3. Heat exchanger unit according to claim 1 or 2, **characterized in that** the heat exchanger unit (2; 102; 402; 502; 602) has a thermal insulation (120; 420), with an inner side (121), which in the assembled state faces the inner atmosphere (17), and an outer side (122), which in the assembled state faces the outer atmosphere (7), wherein in the assembled state the insulation (120; 420) and the heat exchanger (6; 106; 206; 306; 406; 606) are arranged such that the supply air connection (111; 211; 311; 411; 611) and the exhaust air connection (112; 212; 312; 412; 612) lie on the inside (121) of the insulation (20; 120; 420; 620) and the outgoing air connection (114; 214; 314; 614) and the fresh air connection (115; 215; 315; 615) lie on the outside (122) of the insulation (120; 420; 620).

4. Heat exchanger unit according to claim 3, **characterized in that** the heat transfer coefficient of the insulation (20; 120; 420; 620) and/or the hermetic connection is less than 1 W/(m2 K), preferably less than 0.5 W/(m2 K), more preferably less than 0.3 W/(m2 K).

5. Heat exchanger unit according to one of the claims 3 or 4, **characterized in that** at least part of the insulation (20; 120; 420) is mounted on or in the housing (8; 108; 408) of the heat exchanger module (3; 103; 203; 303; 403; 503; 603), and/or at least a portion of said insulation (20; 120; 420; 620) is attached to or in said frame (4; 104; 404; 504; 604; 604'), so that heat transfer from the inner atmosphere (17) to the outer atmosphere (7) and vice versa outside the heat exchanger (6; 106; 206; 306; 406; 606) is prevented as far as possible.

6. Heat exchanger unit according to one of the preceding claims, **characterized in that** the heat exchanger module (3; 103; 203; 303; 403; 503; 603), in particular the housing (8; 108; 408; 608) of the heat exchanger module (3; 103; 203; 403; 503; 603), and the frame (4; 104; 404; 504; 604; 604') have complementary sealing surfaces (9, 10).

7. Heat exchanger unit according to one of the preceding claims, **characterized in that** the at least one part of the heat exchanger module (3; 103; 203; 303; 403; 503; 603), in particular the housing (8; 108; 408; 608), can be plugged into the frame (4; 104; 404; 504; 604; 604'), in particular in the through-flow direction.

8. Heat exchanger unit according to one of the preceding claims, **characterized in that** the at least one part of the heat exchanger module (3; 103; 203; 303; 403; 503; 603), in particular the housing (8; 108; 408), can be placed on the frame (4; 104; 404; 504; 604; 604').

9. Heat exchanger unit according to one of the preceding claims, **characterized in that** the heat exchanger unit (2) is equipped with a conveying means (225; 325) for passing fluids through the heat exchanger module (3; 203; 303; 603).

10. Heat exchanger unit according to one of the preceding claims, **characterized in that** the heat exchanger unit (2) is equipped with a filter (226, 227; 626, 627) for cleaning the fluids.

11. Heat exchanger unit according to one of the preceding claims, **characterized in that** the frame (4; 104; 404) has pipe connections (118; 418) which can be connected on the one hand to a pipe system (113) on the inside of the building and on the other hand to connections of the heat exchanger module (3; 103; 403).

12. Heat exchanger unit according to one of the preceding claims, **characterized in that** the heat exchanger unit (402), in particular the frame (404), is equipped with a heating device (428) for temperature control of the fluids.

13. Heat exchanger arrangement, having a heat exchanger unit (2; 102; 402; 502; 602) according to one of claims 1 to 12, **characterized in that** the frame (4; 104; 404; 504; 604; 604') is integrated into a building envelope (5).

14. Heat exchanger arrangement according to claim 13, **characterized in that** the heat exchanger assembly (1) has a weather protection cover (119).

15. Heat exchanger arrangement according to claim 13 or 14, **characterized in that** the heat exchanger arrangement (1) is mounted at the end of a passage (131), e.g. a chimney, present on the building side.

## Revendications

1. Unité d'échangeur de chaleur comportant au moins un module d'échangeur de chaleur (3; 103; 203; 303; 403; 503; 503; 603) qui comprend au moins un échangeur de chaleur (6 ; 106; 206; 206; 306 ;406 ; 606) pour le passage de fluides entre une atmosphère interne (17) et une atmosphère externe (7), en particulier un échangeur de chaleur à courant transversal ou à courant inverse, dans laquelle le module d'échangeur de chaleur (3 ; 103 ; 203 ; 303 ; 403 ; 403 ; 503 ; 603) comprend un boîtier (8 ; 108 ; 408), et l'échangeur de chaleur (6; 106; 206; 306; 406; 406; 606) comprend au moins une connexion d'alimentation en air (111; 211 ;311 ;411 ; 11) et au moins une connexion d'évacuation en air (112; 212 ; 312 ; 412), qui peuvent notamment être raccordés à des conduits (113) à l'intérieur du bâtiment, et au moins un raccord d'évacuation d'air (114 ; 214 ; 314 ; 614) et au moins un raccord d'air externe (115 ; 215 ; 315 ; 615),
dans laquelle l'unité d'échangeur de chaleur (2 ; 102 ; 402 ; 502 ; 502 ; 602 ; 602) comportant également au moins un cadre (4; 104; 404; 504; 504; 604; 604') qui peut être intégré dans une enveloppe de bâtiment (5) qui est reliée au module d'échangeur de chaleur (3; 103; 203; 203; 403; 503; 606), en particulier de manière amovible, le boîtier (8; 108; 408; 608) avec au moins une section de paroi de boîtier (116) et/ou le cadre (4; 104; 404; 504; 604; 604; 604; 604') avec au moins une section de cadre est relié à l'échangeur de chaleur (6 ; 106 ; 206 ; 306 ; 406) dans une zone entre l'atmosphère intérieure (17) et l'atmosphère extérieure (7), de sorte que, à l'état monté, la connexion d'alimentation en air (111; 211 ;311 ;411 ;611) et la connexion d'évacuation en air (112; 212 ;312 ;412 ;412; 612) s'ouvrent dans l'atmosphère interne (17) et le raccord d'évacuation d'air (114; 214; 314; 614) et le raccord d'air externe (115; 215; 315; 615) s'ouvrent dans l'atmosphère externe (7), **caractérisé en ce que**
le cadre est conçu de telle sorte qu'il élargit l'enveloppe du bâtiment vers l'extérieur, de telle sorte que le cadre intégré dans l'enveloppe du bâtiment forme un renflement dans l'atmosphère extérieure, l'échangeur de chaleur est dirigé vers l'atmosphère extérieure, l'isolation est disposée de telle sorte que l'atmosphère intérieure s'étend dans le module échangeur jusqu'au module échangeur et le module échangeur est accessible d'une part de l'extérieur et d'autre part l'échangeur thermique (6) est exactement entre l'atmosphère extérieure (6) et l'atmosphère intérieure (17),
ou
**que** le cadre est conçu de telle sorte qu'il élargit l'enveloppe du bâtiment vers l'intérieur du bâtiment, de sorte que le cadre intégré dans l'enveloppe du bâtiment forme un renflement dans l'atmosphère intérieure, conduit une partie de l'atmosphère extérieure vers l'intérieur, dirige l'échangeur thermique vers l'intérieur, l'isolation est montée de telle sorte que l'atmosphère extérieure s'étend dans le module d'échangeur de chaleur jusqu'à l'échangeur de chaleur et le module d'échangeur de chaleur est accessible de l'intérieur, mais en même temps l'échangeur de chaleur (6) est situé exactement entre l'atmosphère extérieure (7) et l'atmosphère intérieure (17).

2. Unité d'échangeur de chaleur selon la revendication 1, **caractérisée en ce qu'**une liaison hermétique peut être établie entre le module d'échangeur de chaleur (3; 103; 203 303; 403; 503; 603), en particulier le boîtier (8; 108; 408; 608) du module d'échangeur de chaleur (3 ; 103 ; 203 ; 303 ; 403 ; 503 ; 403 ; 603 ; 603), et le cadre (4 ; 104 ; 104 ; 404 ; 504 ; 604 ; 604').

3. Unité d'échangeur de chaleur selon la revendication 1 ou 2, **caractérisée en ce que** l'unité d'échangeur de chaleur (2 ; 102 ; 402 ; 502 ; 502 ; 602 ; 602) présente une isolation thermique (120 ; 420), avec un côté intérieur (121) qui, à l'état monté, est tourné vers l'atmosphère intérieure (17) et un côté extérieur (122), qui, dans l'état monté, est tourné vers l'atmosphère extérieure (7), l'isolation (120 ; 402 ; 502 ; 602) présentant une isolation thermique (120 ; 420) ; 420) et l'échangeur de chaleur (6 ; 106 ; 106 ; 206 ; 306 ; 406 ; 606 ; 606) sont disposés de telle sorte que la connexion d'alimentation en air (111; 211; 311; 411 ; 411; 611) et la connexion d'évacuation en air (112; 212; 312; 412; 612) soient situés sur la face interne (121) de l'isolation (20; 120 ; 420 ; 620) et le raccord d'évacuation d'air (114 ; 214 ; 314 ; 614) ainsi que le raccord d'air extérieur (115 ; 215 ; 315 ; 615) reposent sur la face extérieure (122) de l'isolation (120 ; 420 ; 620).

4. Unité d'échangeur de chaleur selon la revendication 3, **caractérisé en ce que** le coefficient de transfert thermique de l'isolation (20 ; 120 ; 420 ; 620) et/ou de la liaison hermétique est inférieur à 1 W/(m2 K), de préférence inférieur à 0,5 W/(m2 K), plus préférentiellement inférieur à 0,3 W/(m² K).

5. Unité d'échangeur de chaleur selon l'une des revendications 3 ou 4, **caractérisé en ce qu'**au moins une partie de l'isolation (20 ; 120 ; 420) est montée sur ou dans le boîtier (8; 108; 408) du module d'échangeur de chaleur (3; 103; 203 ; 203; 303; 403; 503; 603), et/ou au moins une partie de ladite isolation (20; 120; 420; 620) est fixée sur ou dans ledit cadre (4; 104; 404; 504; 604; 604'), de sorte que le transfert de chaleur de l'atmosphère intérieure (17) vers l'atmosphère extérieure (7) et vice versa à l'extérieur de l'échangeur de chaleur (6; 106; 206; 306; 406; 606) est largement empêché.

6. Unité d'échangeur de chaleur selon l'une des revendications précédentes, **caractérisée en ce que** le module d'échangeur de chaleur (3 ; 103 ; 203 ; 303 ; 403; 503 ; 603), en particulier le boîtier (8 ; 108 ; 408 ; 608) du module d'échangeur de chaleur (3; 103; 203; 403; 503; 603) et le cadre (4; 104; 404; 504; 404; 604; 604') ont des faces complémentaires (9, 10) de fermeture.

7. Unité d'échangeur de chaleur selon l'une des revendications précédentes, **caractérisée en ce que** l'au moins une partie du module d'échangeur de chaleur (3; 103; 203; 303; 403; 503; 603), en particulier le boîtier (8; 108; 408 ; 608), peut être poussée dans le cadre (4; 104; 404; 504; 604; 604'), notamment en direction du flux traversant.

8. Unité d'échangeur de chaleur selon l'une des revendications précédentes, **caractérisée en ce que** l'au moins une partie du module d'échangeur de chaleur (3; 103; 203; 303; 403; 503; 603), en particulier le boîtier (8; 108; 408), peut être placée sur le cadre (4; 104; 404; 504; 604; 604').

9. Unité d'échangeur de chaleur selon l'une des revendications précédentes, **caractérisée en ce que** l'unité d'échangeur de chaleur (2) est équipée d'un moyen de transport (225; 325) pour faire passer des fluides dans le module d'échangeur de chaleur (3; 203; 303; 603).

10. Unité d'échangeur de chaleur selon l'une des revendications précédentes, **caractérisée en ce que** l'unité d'échangeur de chaleur (2) est équipée d'un filtre (226, 227; 626, 627) pour nettoyer les fluides.

11. Unité d'échangeur de chaleur selon l'une des revendications précédentes, **caractérisée en ce que** le cadre (4; 104; 404) présente des raccords de tuyaux (118; 418) qui peuvent être raccordés d'une part à un système de tuyaux (113) à l'intérieur du bâtiment et d'autre part aux connexions du module d'échangeur de chaleur (3; 103; 403).

12. Unité d'échangeur de chaleur selon l'une des revendications précédentes, **caractérisée en ce que** l'unité d'échangeur de chaleur (402), en particulier le cadre (404), est équipée d'un dispositif de chauffage (428) pour tempérer les fluides.

13. Assemblage d'échangeur de chaleur avec une unité d'échangeur de chaleur (2; 102; 402; 502; 602) selon l'une des revendications 1 à 12, **caractérisé en ce que** le cadre (4; 104; 404; 504; 604; 604') est intégré dans une enveloppe (5) du bâtiment.

14. Assemblage d'échangeur de chaleur selon la revendication 13, **caractérisé en ce que** l'ensemble échangeur de chaleur (1) comporte un couvercle de protection contre les intempéries (119).

15. Assemblage d'échangeur de chaleur selon la revendication 13 ou 14, **caractérisé en ce que** l'agencement d'échangeur de chaleur (1) est monté à l'extrémité d'un conduit (131), par exemple une cheminée, présent sur le côté bâtiment.
